# EUROPEAN PATENT SPECIFICATION

(11) **EP 0 225 595 B1**
(45) Date of publication and mention of the grant of the patent: **25.08.1993**
(21) Application number: 86116786.4
(22) Date of filing: 03.12.1986
(51) Int. Cl.: B01D 53/36, B01J 37/02, B01J 35/00

(54) **Non-noble metal combustion catalyst and process for its preparation**
Nicht-Edelmetall-Verbrennungskatalysator und Verfahren zu seiner Herstellung
Catalyseur de combustion contenant un métal non noble et son procédé de fabrication

(30) Priority: 12.12.1985 CN 85109694; 06.05.1986 CN 86103200
(43) Date of publication of application: 16.06.1987
(73) Proprietor: East China University of Chemical Technology, Shanghai (CN)
(72) Inventor: Ren, Wang, Shanghai (CN); Shanliang, Wu, Shanghai (CN); Zhigang, Zhang, Shanghai (CN)
(74) Representative: von Füner, Alexander, Dr.

(56) References cited:
- EP-A- 0 130 835
- FR-A- 2 171 160
- US-A- 3 226 340
- US-A- 3 985 683

## Description

The present invention relates to a non-noble metal combustion catalyst of monolithic form and also relates to the process for its preparation.

The rapid development of modern industry and automotives has created daily increasing pollution to the atmosphere by carbon monoxide, hydrocarbons with their oxygen-containing derivatives and nitrogen oxides. To convert these noxious substances into carbon dioxide, water and nitrogen as well as to recover the thermal energy involved is obviously an effective method to get a better control of the pollution. Hence, to gain a catalyst of excellent performance must be the key-link of practicable measures for the catalytic combustion.

A satisfactory combustion catalyst should possess good catalytic activity, capability to endure the load of high space velocity, low igniting temperature, high thermal resistance and strong mechanical strength. In addition, it must have a sufficiently long working life.

It has been attempted to replace the noble ones by non-noble metals. Unfortunately, these non-noble metal catalysts it general do not possess the high catalytic activity as needed, and they are unable to stand the heavy load of space velocity encountered. As their igniting temperature of combustion is rather high whereas the thermal resistance as well as the mechnical strength are low, their working life is short.

The FR-A 2 171 160 refers to many catalytic elements selected from the group consisting of the metals of the group I-B, V-B, VI-B, VII-B and VIII of the Periodic Table in an oxide form and concerns a new catalyst for the treatment of exhaust gases, compiling rare earth metals on a stabilized alumina or ceramic silicate support in a certain relationship. As rare earth metals are listed lanthanum, praseodymium and neodymium in their oxide form.

The object of the present invention is on the one hand to provide a catalyst with non-noble metals as its catalytically active component instead of the conventional, scarce and expensive noble metals and on the other hand to improve the non-noble metal catalyst described in FR-A-2 171 160. The invention breaks up the traditional belief long dictated by the idea that use of the noble metals being the sole possible way to create combustion catalysts. Then, it would ease considerably the problem of the insufficient supply of noble metals, and make a step of advance on the disposal of industrial waste gas and also on the treating of tail gas from the automobiles.

Another object of the invention is to provide a process of preparation for the non-noble metal combustion catalyst by which the catalyst so formed will satisfy the requirements mentioned above.

The present invention provides a non-noble metal honeycomb monolithic combustion catalyst which is essentially composed of (1) a primary carrier made of certain sorts of ceramic silicate material, (2) a secondary carrier made of a metallic oxide coating layer on the primary carrier and (3) a catalytically active component on the secondary carrier, characterized in that
1) the secondary carrier is made of aluminium oxide modified by oxide of rare earth metal;
2) the catalytically active component is applied on the secondary carrier and is constituted by a mixture of oxides of copper, manganese and oxides of the rare earth metal cerium, and optionally oxides of cobalt, nickel, vanadium and potassium.

It is preferred that the carrier is made of the honeycomb monolithic ceramic material which is provided with many inside-seated open channels.

In this case the internal channels are preferrably at both ends open and their directions stretch horizontally to the Z-axis, the cross-sectional form of the pore is square, triangular or circular as desired, pore density is 25 to 64 pores/cm and pore volume is 0.1 to 0.5 ml/g.

According to the invention the rare earth metallic oxide should be especially lanthanum oxide which holds 1 to 5% by weight in the whole composition of the aluminium oxide coating layer.

It is preferred that the weight proportions of active components in the catalytic part are given as follows:

| | |
|---|---|
| oxide of copper | 1-15 |
| oxdide of vanadium | 0-15 |
| oxide of cobalt | 0-6 |
| oxide of nickel | 0-6 |
| oxide of manganese | 1-3 |
| oxide of cerium | 1-10 |
| oxdie of potassium | 0-5 |

It is further preferred that the weight proportion of the secondary carrier to the total weight of the whole carrier varies from 5 to 15%.

Finally, it is preferred that the weight proportion of the portion of the catalytically active component to the total weight of the catalyst varies within 2 to 35%.

The present invention also provides a process of preparing the non-noble metal combustion catalyst of honeycomb monolithic form in general. The carrier is immersed in a coating liquid. After the immersion is complete, it is then taken out, allowed to get well dried and baked. The whole process, i.e. immersion, drying and baking, must be carried out at least twice. The second carrier is coated on the first carrier in the first time of immersion, drying and baking, and then the catalytically active component is loaded on in the second time of the treatment.

As the catalyst formed is so constructed and so prepared according to what the invention demanded, it will give the following desirable effects:
1. The intrinsically catalytic activity of non-noble metals is not inferior to that of noble metals during the proceeding of the catalytic combustion.
2. It is capable of withstanding high temperature during combustion.
3. It is capable of withstanding high load of space velocity and having high mechanical strength.
4. It possesses the capability to repel the poisoning effects caused by sulfur, lead, smog and oily dirts, and possesses a longer working life.
5. It has a low igniting temperature for catalytic combustion.

The manufacturing process recommended in this invention is easy to carry out in practice and its operations are simple. By the said method, non-noble metal oxidation catalyst of honeycomb monolithic form can be obtained and give the expected performance mentioned above.

The catalyst and process for its preparation in this invention will be described in more detail with illustrative examples in the following passages.

The catalyst provided in the present invention is quite different from what has already been reported in literature published. In general, the catalysts are constructed in two parts: the carrier and the catalytically active component. The carrier is further subdivided into two parts. Silicate materials are used to form the so-called primary carrier as skeleton, while a metallic oxides coating as secondary carrier is subsequently put on the skeleton. This coating possesses sufficiently high thermal stability. Another part having the catalytic power is composed of a mixture of metallic oxides and oxides of rare earth metal. The silicate materials mentioned are ceramic body in honeycomb monolithic form. Inside the body many channels are present with both ends open and stretching horizontally to the direction of the Z-axis. The cross-sectional form of the channel pores may be square, triangular or circular. Pore density is 25-64 pores/cm². The pore volume in the ceramic body is 0.1-0.5 ml/gram. The coating for the secondary carrier is a coating of aluminium oxide in which the oxides of rare earth metals are appropriately added. The actual constituents of the oxides of rare earth metals are oxides of Lanthanum carrying 1-5% by weight in the composition of aluminium oxide coating. The catalytically active components are oxides of copper, manganese and rare earth element. The oxides of rare earth metals used therein are oxides of cerium. The oxides of cobalt, nickel, vanadium and potassium can also be involved.

The range of the relative proportions of these oxides with catalytic activity are represented as follows:

| | |
|---|---|
| oxide of copper | 1-15 |
| oxide of vanadium | 0-15 |
| oxide of cobalt | 0-6 |
| oxide of nickel | 0-6 |
| oxide of manganese | 1-3 |
| oxide of cerium | 1-10 |
| oxide of potassium | 0-5 |

For the non-noble metal catalyst in the present invention, the secondary carrier formed by the aluminium oxide (in which rare earth oxide is present) will be present in an amount of from 5 to 15 % by weight of the total weight of the carrier in total, while the amount of the catalytically active component is 2 to 35 % by weight of the total weight of the catalyst.

The catalyst, constructed by the structure and specified components as mentioned above, can make the intrinsically catalytic activity of the non-noble metals high enough to match that of noble metals. It settled one troublesome problem long unsolved.

It is well-known that the catalysts made from the noble metals, such as Pt and Pd possess the appropriate catalytically active sites which activate the oxygen rapidly to promote the catalytic combustion.

Although, the catalysts constructed from the non-noble metals of transitional elements have the same function by the help of the effects resulted from the valence change of metallic ions and from the lattice oxygen in the crystal lattice. If the oxygen supply presented in the gaseous phase fails to catch up the consumption rate of oxygen in the surface of the catalyst, the combustion will be extinguished.

In order to improve the catalytic activity of the combustion of non-noble metals catalysts, a successfully active structure has been designed in this invention, that is the catalyst formed from the metallic oxide complex containing the rare earth metal.

In this invention it is found that the addition of rare earth metal oxide would make the oxygen a rapid but weak adsorption. The weakly adsorbed oxygen species are able to migrate to the adsorption site of their neighbouring metallic oxide and turn to active oxygen species.

Besides, the coupling of rare earth oxides with transitional metal oxides still increases the reducing power of the catalyst, and the reaction of nitrogen oxides with carbon monoxide and hydrocarbon to nitrogen is accelerated.

The rare earth metal oxides involved in the secondary carrier will enhance the thermal stability of Al₂O₃. It is evidenced by the following facts:
1. Decreasing the diffusing rate of Al³⁺, retarding the rearrangement of Al³⁺, delaying the rate of the phase change.
2. The doped rare earth metal oxide is on the outer surface rich of catalyst which keeps the fine particles of active component apart and difficult to assemble themselves together. Any possible formation of bottleneck at the early stage of baking is thus blocked, the movement of surface diffusion at the vacancy is also retarded.

According to the present invention, the manufacturing process is generally proceeded in two steps:
First step: Immersing the primary carrier, which serves as the skeleton of the catalyst, in the coating liquid involving the constitutes of the secondary carrier, then allowing it to dry and bake.
Second step: The carrier mentioned above is then put into a liquid bath in which the components of catalytic activity are presented. After the necessary drying and baking the components of catalytic activity are now adhered to the outside surface of the carrier.

The material used as the honeycomb monolithic form skeleton is of some kinds of ceramic materials.

Inside the skeleton there are many open channels running in the direction horizontal to the Z-axis with both ends opened. The form of the channel cross-section is square, triangular or circular. Pore density is 25 to 64 pores/cm², the pore volume of the carrier is 0.1 to 0.5 ml/gram.

The liquid for the first impregnation is a mixture of aluminium oxide gel and solution of lanthanum nitrate (concentration = 24 to 30 % by volume).

The ratio between the alumina gel and the lanthanum nitrate solution is 1,000 to 2,000 gram to 100-200 ml.

As to the liquid for the second impregnation, the solution is composed of Cu(NO₃)₂ ·3H₂O, Mn (NO₃)₂, Ce(NO₃)₃ ·6H₂O and water, to which CO (NO₃)₂ · 6H₂O, Ni(NO₃)₂ · 6H₂O, NH₄VO₃ and KNO₃ can also be added.

Except the Mn (NO₃)₂ and water in the above formulation, all the salts used are in solid form. The solid salts are put into the Mn (NO₃)₂ solution and the given amount of water and allowed to form a complete solution. That is the liquid containing the active constituents of catalytic activity for later impregnation use. There is twice impregnation in this process, for every round of routine impregnation, it will take half an hour to one hour as desired. A time less than half an hour will generally make the impregnation insufficient and yield a poor secondary carrier coating. On the contrary, too long an immersing, e.g. over 1 hour, is also undesirable. Prolonged time of impregnation will slow down the working cycle and consequently lower the production capacity on the commercial scale.

As to the best drying temperature, regardless of the first round or the second round, it appears that 90 to 100°C is appropriate. Drying time should be kept around 5-7 hours.

Too low a drying temperature will cause evaporation incomplete at the surface, whereas too strong a temperature applied will make the nitrate salts decomposed directly. Those misapplied steps as mentioned above are all harmful to the proper coating of the secondary carrier and the part having the components of effective catalytic activity. The proper temperature, either for the first round or the second one, is desirably within the range of 500 to 800°C. For the baking time, 2 to 3 hours seem to be sufficient. The temperature recommended is high enough. Overheating will bring the catalyst to get sintered and render the specific area diminished, and catalytic activity is dropped.

### Example 1

Start with porous ceramic materials etc. as mentioned above to make the primary carrier. The body had 25 channel openings per cm² with a pore volume of 0.1 to 0.5 ml/gram.

1,500 g of alumina gel was thoroughly mixed with the solution of lanthanum oxide (24 % by volume) to make a fluid for impregnation purpose in the first round. The primary carrier was then put into the prepared fluid.

The impregnated articles were taken out after 40 minutes of impregnation and dried at 100°C for 6 hours. The next step was baking the impregnated articles at 600°C for 3 hours. The conversion of the primary carrier into a carrier coated with the secondary carrier was then completed.

The impregnating solution containing the constituents of catalytic ac ivity was then prepared, using the following chemicals:

| | | |
|---|---|---|
| 650 g | Cu(NO₃)₂ · 3H₂O | solid |
| 250 g | Cu(NO₃)₂ · 6H₂O | solid |
| 250 g | Ni(NO₃)₂ · 6H₂O | solid |
| 100 g | Mn(NO₃)₂ | 50% solution |
| 100 g | Ce(NO₃) · 6H₂O | solid |
| 500 g | water | |

They were well mixed together to form a solution. It is the impregnating solution required. The carrier mentioned above was immersed into the solution for complete wetting. It was taken out after 40 minutes impregnation. Drying was carried out at 100°C for 6 hours. After drying it was baked at 600°C for 3 hours. The finished product is the non-noble metal honeycomb monolithic combustion catalyst claimed by the present invention.

The newly made catalyst has been tried out in the treating of industrial waste gases. The actual performance data obtained are given in Table 1 and Table 2.

**Table 1**

| The Catalytic Characteristics | |
|---|---|
| Usage | Catalytic combustion of carbon monoxide, hydrocarbons and oxygen derivatives of hydrocarbons. |
| | It is used for treating the industrial waste gases (carbon monoxide, kerosene alkenes, aromatics, aldehydes, ketones, alcohol ether, ester, phthalic anhydride, benzo-pyrene, etc.) Also for the recovery of energy which is generated from the catalytic combustion at high temperature. |
| Igniting temperature °C | 150-300 (for benzo-pyrene 350-380) |
| Space velocity | 10,000 - 40,000 M³ waste gas/M³ catalyst. h |
| Purifying efficiency for organic materials | 90 to 100 % |
| Thermal stabiliy, °C | 700 |
| Resistance to poisons | Capable to resist the attack of tarry fog and smoke coming from the baked paints presented in the discharged pipe; can resist 30 p.p.m. of SO₂ |
| The working life | Can work properly over 1 year for regular conditions (may extend to 2-3 years for some works). |

**Table 2**

| The Igniting Temperature of the Catalyst Toward Various Components in Wast Gases | |
|---|---|
| Combustible constituents in burnt gases | Igniting temperature °C |
| Carbon monoxide | 150-200 |
| Propylene | 200-250 |
| Diamylene | 200-300 |
| Benzene | 240-260 |
| Toluene | 240-260 |
| Diacetone alcohol | 200-240 |
| Xylene | 200-300 |
| Acetaldehyde and high aldehydes | 150-200 |
| Benzo-pyrene | 350-380 |
| Maleic anhydride | 240-260 |
| Phthalic anhydride | 280-300 |
| Phenol | 280-300 |
| Note: The igniting temperature is defined as the lowest temperature required of the entering raw gas in order to allow the gas to have a start for continuous burning so that the catalyst will be able to make the dirty gas be cleaned to a purity exceeding 90%. | |

The average purifying efficiency of discharged tail gases from an automobile with a velocity of 20, 40, 60, 80 km/h has been tested by applying the novel catalyst as mentioned and it is recorded as follows:

| | |
|---|---|
| For carbon monoxide | >90 % |
| For hydrocarbons | >60 % |
| For NOx | >70 % |

### Example 2

A second new catalyst with pore density of 49 pores/cm² was similarly made in identical conditions of the specifications and process as mentioned in Example 1, except that the weight proportions among the constituents of catalytic activity were different from those in Example 1. The proportions were:

| | | |
|---|---|---|
| 400 g | Cu(NO₃)₂ · 3H₂O | |
| 180 g | Co(NO₃)₂ · 6H₂O | |
| 200 g | Ni(NO₃)₂ · 6H₂O | |
| 150 g | Mn(NO₃)₂ | 50 % solution |
| 70 g | Ce(NO₃)₃ · 6H₂O | |
| 300 g | water | |

By the above composition, a new non-noble metal honeycomb monolithic oxidation catalyst was also obtained.

The ingniting temperature of various kinds of waste gases with respect to the given catalyst will be shown in Table 3.

**Table 3**

| The igniting temperature vs. various gases | |
|---|---|
| Combustible constituents in incoming gases to be burnt | Igniting Temperature °C |
| Diamylene | 250 - 280 |
| Acetaldehyde | 150 - 180 |
| Acrylic acid | 300 - 340 |
| Acetone | 200 - 250 |
| Toluene | 240 - 260 |

The other performances of the given catalyst are fundamentally parallel to that of Example 1.

For the treatment of automobile tail gas (US Federal Emission Test), the following data are recorded.

**Table 3A**

| Purifying power for automobile emission | |
|---|---|
| CO | Emission 0.64 g/0,62 km (mile) |
| Hydrocarbons | Emission 0.30 g/0,62 km (mile) |
| NOx | Emission 0.28 g/0,62 km (mile) |

### Comparative Example

The same ceramic materials as mentioned above were taken and catalysts were produced in a way according to the exact requirements of Example 1, but differing only in respect of the impregnating liquid containing the catalytic activity in which Ce (NO₃)₃ · 6H₂O is excluded.

The two catalyst samples (one from the comparative example and the other from example 1) are compared side by side , and the differences displayed can be seen in the following table:

| Catalyst | Required temperature | | | |
|---|---|---|---|---|
| | °C or 50% of conversion | | °C for 90% of conversion | |
| | CO | hydrocarbons | CO | hydrocarbons |
| Comparative Example | 200 | 210 | 300 | 350 |
| Example 1 | 130 | 165 | 180 | 250 |

From the above results it can evidently be seen that the catalyst composition with or without the introduction of rare earth metal makes a great significance. When the rare earth metal constituent was eliminated from the catalytic composition, the temperature necessary to initiate the combustion had to be raised much higher than that normally needed, and the energy consumption in the processing must be increased, in other words, their catalytic power became lower.

Furthermore, as the space velocity of the gases in burning is increased to 5 x 10⁴ m/h, the activity power in the sample of the example 1 is still strong enough and can keep its original condition unchanged, while that of the comparative example would drop down 20 - 30 %. It further confirms that the introduction of rare earth metal constituents into the active part of the catalyst is of greatest importance.

## Claims

1. A non-noble metal honeycomb monolithic combustion catalyst essentially composed of (1) a primary carrier made of certain sorts of ceramic silicate material, (2) a secondary carrier made of a metallic oxide coating layer on the primary carrier and (3) a catalytically active component,
characterized in that
1) the secondary carrier is made of aluminium oxide modified by oxide of rare earth metal;
2) the catalytically active component is applied on the secondary carrier and is constituted by a mixture of oxides of copper, manganese and oxides of the rare earth metal cerium, and optionally oxides of cobalt, nickel, vanadium and potassium.

2. A catalyst according to claim 1, wherein the carrier of silicate material is made of the honeycomb monolithic ceramic material which is provided with many inside-seated open channels.

3. A catalyst according to claim 2, wherein the internal channels are at both ends open and their directions stretch horizontally to the Z-axis, the cross-sectional form of the pore is square, triangular or circular as desired, pore density is 25 to 64 pores/cm and pore volume is 0.1 to 0.5 ml/g.

4. A catalyst according to one of the claims 1-3, wherein the said rare earth metallic oxide is lanthanum oxide which holds 1 to 5% by weight in the whole composition of the aluminium oxide coating layer.

5. A catalyst according to claims 1 and 4, wherein the weight proportions of active components in the catalytic part are given as follows:
| | |
|---|---|
| Oxide of copper | 1-15 |
| Oxide of vanadium | 0-15 |
| Oxide of cobalt | 0- 6 |
| Oxide of nickel | 0- 6 |
| Oxide of manganese | 1- 3 |
| Oxide of cerium | 1-10 |
| Oxide of potassium | 0- 5 |

6. A catalyst according to one of the claim 1-5, wherein the weight proportion of the secondary carrier to the total weight of the whole carrier varies from 5 to 15%.

7. A catalyst according to one of the claims 1-6, wherein the weight proportion of the portion of the catalytically active component to the total weight of the catalyst varies within 2 to 35%.

8. A method of manufacturing a non-noble metal honeycomb monolithic combustion catalyst according to one of the preceding claims, characterized in that the carrier is impregnated in the liquid bath, dried and baked at least twice, whereby the end product of the first circle is the finished carrier in which the secondary carrier has been coated on the primary carrier, and in the second circle the components of the catalytic activity are then applied on the surface of the end product of the first circle.

9. A method according to claim 8, wherein the carrier consists of ceramic materials of monolithic form which is provided internally with many honeycomb open channels.

10. A method according to claim 9, wherein the channels are at both ends open and stretch themselves horizontally to the direction of the Z-axis, the form of their cross-section is square, triangular or circular as desired: pore density is 25 to 64 pores/cm²; the pore volume is 0.1 to 0.5 ml/gram.

11. A method according to claim 8, wherein the liquid for the first impregnation is a mixed solution of alumina gel with lanthanum nitrate (concentration = 24-30 % by volume).

12. A method according to claim 11, wherein the composition of the mixed solution has the proportion of:
aluminium oxide gel : lanthanum nitrate = (1,000 - 2,000 gram) : (100 - 200 ml).

13. A method according to claim 8, wherein the composition of the coating mixture for the second impregnation is a mixture of Cu (NO₃)₂ · 3H₂O, Mn(NO₃)₂, Ce(NO₃)₃ · 6H₂O and water, and in some case Co (NO₃)₂ ·6H₂O, Ni(NO₃)₂ · 6H₂O, NH₄VO₃, KNO₃ can also be added.

14. A method according to claim 8, wherein the time of impregnation is from 0.5 to 1 hour.

15. A method according to claim 8, wherein the temperature for every round of drying is 90 to 110 °C, while the time is 5 to 7 hours.

16. A method according to claim 8, wherein the baking temperature for every round is 500 to 800 °C, while the time is within 2 and 4 hours.

## Patentansprüche

1. Monolithischer Verbrennungskatalysator mit Wabenstruktur auf der Basis eines Nichtedelmetalls, der im wesentlichen zusammengesetzt ist aus:
(1) einem ersten, aus verschiedenen Arten von keramischen Silikatstoffen hergestellten Träger,
(2) einem zweiten, aus einem Metalloxid hergestellten Träger als Beschichtungsschicht auf dem ersten Träger und
(3) einer katalytisch wirksamen Komponente, dadurch **gekennzeichnet,** daß
1) der zweite Träger aus durch ein Seltenerdmetalloxid modifiziertem Aluminiumoxid hergestellt ist und
2) die katalytisch wirksame Komponente auf den zweiten Träger aufgebracht ist und aus einem Gemisch aus Kupfer- und Manganoxid sowie Oxiden des Seltenerdmetalls Cer und gegebenenfalls Kobalt-, Nickel-, Vanadium- und Kaliumoxid besteht.

2. Katalysator nach Anspruch 1, wobei der Träger aus Silikatmaterial aus dem Wabenstruktur aufweisenden monolithischen keramischen Material hergestellt ist, das im Inneren viele offene Kanäle aufweist.

3. Katalysator nach Anspruch 2, wobei die inneren Kanäle an beiden Enden offen sind und sie horizontal zur Z-Achse verlaufen, die Poren je nach Wunsch quadratischen, dreieckigen oder kreisförmigen Querschnitt aufweisen, die Porendichte 25 bis 64 Poren/cm²und das Porenvolumen 0,1 bis 0,5 ml/g beträgt.

4. Katalysator nach einem der Ansprüche 1 bis 3, wobei das SE-Metalloxid Lanthanoxid ist, das 1 bis 5 Gew.-% des Gesamtgemisches der Aluminiumoxidbeschichtung ausmacht.

5. Katalysator nach Anspruch 1 und 4, wobei den wirksamen Komponenten im katalytischen Teil folgende Gewichtsanteile zukommen:
| | |
|---|---|
| Kupferoxid | 1 - 15 |
| Vanadiumoxid | 0 - 15 |
| Kobaltoxid | 0 - 6 |
| Nickeloxid | 0 - 6 |
| Manganoxid | 1 - 3 |
| Ceroxid | 1 - 10 |
| Kaliumoxid | 0 - 5. |

6. Katalysator nach einem der Ansprüche 1 bis 5, wobei der Gewichtsanteil des zweiten Trägers 5 bis 15 %, bezogen auf das Gesamtgewicht des gesamten Trägers, ausmacht.

7. Katalysator nach einem der Ansprüche 1 bis 6, wobei der Gewichtsanteil der katalytisch wirksamen Komponente 2 bis 35 %, bezogen auf das Gesamtgewicht des Katalysators, ausmacht.

8. Verfahren zur Herstellung eines monolithischen Verbrennungskatalysators mit Wabenstruktur auf der Basis eines Nichtedelmetalls nach einem der vorangegangenen Ansprüche, dadurch **gekennzeichnet,** daß der Träger in einem Flüssigkeitsbad getränkt, getrocknet und wenigstens zweimal gesintert wird, wodurch das Endprodukt des ersten Kreislaufes der fertiggestellte Träger ist, wobei der zweite Träger auf den ersten aufgebracht ist, und beim zweiten Kreislauf die katalytisch wirksamen Komponenten dann auf die Oberfläche des Endproduktes des ersten Kreislaufes aufgebracht werden.

9. Verfahren nach Anspruch 8, wobei der Träger aus keramischen Stoffen von monolithischer Form besteht, die innen durch eine Vielzahl von Wabenstruktur aufweisenden offenen Kanälen gewährleistet wird.

10. Verfahren nach Anspruch 9, wobei die Kanäle an beiden Enden offen sind und und sie horizontal zur Z-Achse verlaufen, die Poren je nach Wunsch quadratischen, dreieckigen oder kreisförmigen Querschnitt aufweisen, die Porendichte 25 bis 64 Poren/cm² und das Porenvolumen 0,1 bis 0,4 ml/g beträgt.

11. Verfahren nach Anspruch 8, wobei die erste Tränkstufe eine Mischlösung aus Tonerdegel und Lanthannitrat (Konzentration 24 bis 30 Vol.-%) ist.

12. Verfahren nach Anspruch 11, wobei die Mischlösung folgendes Mischungsverhältnis aufweist:
Tonerdegel : Lanthannitrat = (1.000 bis 2.000 g) : (100 bis 200 ml).

13. Verfahren nach Anspruch 8, wobei das Beschichtungsgemisch für die zweite Tränkstufe ein Gemisch aus Cu(NO₃)₂ . 3H₂O, Mn(NO₃)₂, Ce(NO₃)₃ . 6H₂O und Wasser ist, dem gegebenenfalls Co(NO₃)₂ . 6H₂O, Ni(NO₃)₂ . 6H₂O, NH₄VO₃ oder KNO₃ zugesetzt werden können.

14. Verfahren nach Anspruch 8, wobei die Tränkungsdauer 0,5 bis 1 Stunde beträgt.

15. Verfahren nach Anspruch 8, wobei die Temperatur für jeden Trocknungsvorgang 90 bis 110°C und die Trocknungsdauer jeweils 5 bis 7 Stunden betragen.

16. Verfahren nach Anspruch 8, wobei die Sintertemperatur jeweils 500 bis 800°C und die Sinterdauer jeweils 2 bis 4 Stunden betragen.

## Revendications

1. Catalyseur de combustion de type monolithe à structure nid d'abeilles à base de métaux non précieux composé essentiellement de (1) un premier support fait d'un matériaux céramique de type silicate, (2) un deuxième support fait d'une couche de revêtement en oxyde métallique déposée sur le premier support et (3) un composant catalytiquement actif,
***caractérisé en ce que***
1) le deuxième support est fait d'oxyde d'aluminium modifié par un oxyde de terres rares ;
2) le composant catalytiquement actif est appliqué sur le deuxième support et est constitué d'un mélange d'oxydes de cuivre et de manganèse, et d'oxydes de la terre rare qu'est le cérium, et optionnellement d'oxydes de cobalt, nickel, vanadium et potassium.

2. Catalyseur selon la Revendication 1, dans lequel le support en matériau silicate est sous forme de matériau céramique de type monolithe à structure nid d'abeilles qui est pourvu de nombreux canaux internes ouverts.

3. Catalyseur selon la Revendication 2, dans lequel les canaux internes sont ouverts à leurs deux extrémités et leur direction s'étend horizontalement à l'axe Z, la section transversale du pore est de forme carrée, triangulaire ou circulaire selon ce qui est désiré, la densité des pores est de 25 à 64 pores/cm² et le volume des pores est de 0,1 à 0,5 ml/g.

4. Catalyseur selon l'une des Revendications 1 à 3, dans lequel ledit oxyde métallique de terres nues est l'oxyde de lanthane qui contient de 1 à 5 % en poids de la composition globale de la couche de revêtement en oxyde d'aluminium.

5. Catalyseur selon les Revendications 1 et 4, dans lequel les proportions en poids des composants actifs dans la partie catalytique sont les suivantes :
| | |
|---|---|
| oxyde de cuivre | 1-15 |
| oxyde de vanadium | 0-15 |
| oxyde de cobalt | 0-6 |
| oxyde de nickel | 0-6 |
| oxyde de manganèse | 1-3 |
| oxyde de cérium | 1-10 |
| oxyde de potassium | 0-5 |

6. Catalyseur selon l'une des Revendications 1 à 5, dans lequel la proportion en poids du deuxième support par rapport au poids total de l'ensemble du support varie des 5 à 15 %.

7. Catalyseur selon l'une des Revendications 1 à 6, dans lequel la proportion en poids de la portion du composant catalytiquement actif par rapport au poids total du catalyseur varie entre 2 et 35%.

8. Procédé de fabrication d'un catalyseur de combustion de type monolithe à structure nid d'abeilles à base de métaux non précieux selon l'une des Revendications précédentes, ***caractérisé en ce que*** le support est imprégné dans le bain liquide, séché et cuit au moins deux fois, à la suite de quoi le produit final du premier cycle est le support fini dans lequel le deuxième support a été déposé sur le premier support, et dans le second cycle les composants de l'activité catalytique sont alors déposés sur la surface du produit final du premier cycle.

9. Procédé selon la Revendication 8, dans lequel le support consiste en matériaux céramiques de forme monolithe qui présentent intérieurement de nombreux canaux ouverts en structure à nid d'abeilles.

10. Procédé selon la Revendication 9, dans lequel les canaux sont ouverts à leurs deux extrémités et leur direction s'étend horizontalement à l'axe Z, la section transversale du pore est de forme carrée, triangulairé ou circulaire selon ce qui est désiré, la densité des pores est de 25 à 64 pores/cm² et le volume des pores est de 0,1 à 0,5 ml/g.

11. Procédé selon la Revendication 8, dans lequel la première imprégnation est une solution en mélange de gel d'alumine et de nitrate de lanthane (concentration = 24 à 30 % en volume).

12. Procédé selon la Revendication 11, dans lequel la composition de la solution présente les proportions suivantes : gel d'oxyde d'aluminium/nitrate de lanthane = (1000 à 2000 grammes)/(100 à 200 ml).

13. Procédé selon la Revendication 8, dans lequel la composition du mélange de revêtement pour la seconde imprégnation est un mélange de Cu(NO₃)₂.3H₂O, Mn(NO₃)₂, Ce(NO₃)₃.6H₂O et d'eau, et auquel on peut ajouter dans certains cas Co(NO₃)₂.6H₂O, Ni(NO₃)₂.6H₂O, NH₄VO₃, KNO₃.

14. Procédé selon la Revendication 8, dans lequel le temps d'imprégnation est compris entre 0,5 et 1 heure.

15. Procédé selon la Revendication 8, dans lequel la température pour chaque cycle de séchage est comprise entre 90 et 110°C, la durée étant de 5 à 7 heures.

16. Procédé selon la Revendication 8, dans lequel la température pour chaque cycle de cuisson est de 500 à 800°C, la durée étant de 2 à 4 heures.
